# EUROPÄISCHE PATENTSCHRIFT

(11) **EP 0 699 463 B1**
(45) Veröffentlichungstag und Bekanntmachung des Hinweises auf die Patenterteilung: **16.06.1999**
(21) Anmeldenummer: 95113080.6
(22) Anmeldetag: 19.08.1995
(51) Int. Cl.: B01D 19/00, C08F 6/16

(54) **Vorrichtung und Verfahren zur Intensiventgasung von PVC-Suspensionen und Dispersionen**
Apparatus and method for intensiv devolatilisation of PVC-suspension and dispersion
Dispositif et procédé de dévolatilisation intensive de dispension et suspensions de PVC

(30) Priorität: 30.08.1994 DE 4430763
(43) Veröffentlichungstag der Anmeldung: 06.03.1996
(73) Patentinhaber: BASF AKTIENGESELLSCHAFT, 67056 Ludwigshafen (DE)
(72) Erfinder: Perner, Thomas, Dr., D-76879 Essingen (DE); Elzer, Gunter, D-68259 Mannheim (DE)

(56) Entgegenhaltungen:
- EP-A- 0 049 784
- DE-C- 446 986
- US-A- 1 857 650
- US-A- 3 930 931
- US-A- 4 168 373
- J HENGSTENBERG, B STURM, O WINKLER: "Messen, Steuern und Regeln in der Chemischen Technik, Band III" , 1981, SPRINGER-VERLAG, BERLIN

## Beschreibung

Die vorliegende Erfindung betrifft eine Vorrichtung zur Intensiventgasung von Polyvinylchlorid-haltigen Dispersionen.

Des weiteren betrifft die vorliegende Erfindung die Verwendung der erfindungsgemäßen Vorrichtung zur Intensiventgasung von PVC-Dispersionen sowie ein Verfahren hierzu.

Die DE-A-25 31 111 beschreibt ein Verfahren zur Entfernung von restlichem Vinylchlorid (VC) aus sich in wäßriger Dispersion (sowohl Suspension als auch Emulsion) befindenden Vinylchloridpolymeren, wobei man die wäßrige Dispersion des Polymeren auf eine dem Einfrierbereich des Polymeren wenigstens gleiche Temperatur bringt und sie einem Mitschleppen durch ein inertes Fluid unterwirft. Insbesondere verwendet man in der DE-A-25 31 111 Wasserdampf als inertes Fluid, der nach Verlassen der wäßrigen Dispersion in einem Kondensator kondensiert wird, auf dem direkt eine Vakuumpumpe angeordnet ist. Nachteilig an diesem Verfahren sind die Rest-VC-Werte der entgasten Suspensionen (im Unterschied zu Emulsionen, die naturgemäß auf Grund ihrer Teilchengröße leichter entgast werden können). Gemäß Tabelle in der DE-A-25 31 111 liegen die Rest-VC-Gehalte vor dem Trocknen nicht unter 25 ppm. Der für das Beispiel 5 angegebene Wert entspricht dem Rest-VC-Gehalt nach dem Trocknen, da die gleichen Bedingungen wie in Beispiel 1 bis auf eine kürzere(!) Entgasungszeit eingehalten wurden.

Die EP-A-359 432 beschreibt eine Vorrichtung zur Entgasung flüssiger Mischungen, enthaltend im wesentlichen Polystyrol und flüchtige Bestandteile wie Monomere, wobei ein Wärmetauscher und eine Vakuumeinheit direkt mit dem Behälter, in dem sich die zu entgasende Polymermischung befindet, verbunden sind. Die erreichten Restmonomergehalte liegen unter 300 ppm, jedoch nicht unter 177 ppm.

In der US-A-4 168 373 ist ein Verfahren und eine Vorrichtung zur Herstellung und zur Entgasung von Polyvinylchlorid-Latices beschrieben. Dabei wird in einem ersten Kessel Vinylchlorid emulsionspolymerisiert und der entstandene Latex wird in einem zweiten Kessel überführt, wo er durch Einblasen von Dampf und Anlegen eines Vakuums entgast wird. Eine Kühlvorrichtung zur Kondensation des Wasserdampfs ist nicht vorgesehen.

Aufgabe der vorliegenden Erfindung war es daher, eine verbesserte Vorrichtung zur Intensiventgasung von PVC-haltigen Dispersionen, insbesondere von Suspensionen und Emulsionen, im Polymerisationskessel zur Verfügung zu stellen, die es erlaubt, Rest-VC-Werte von unter 25 ppm, insbesondere unter 10 ppm, vor dem Trocknen von Dispersionen, insbesondere von Suspensionen, zu erhalten, um somit eine weitere, nachträgliche Behandlung zur Rest-VC-Entfernung zu vermeiden, ohne hierbei die Produktqualität zu beeinträchtigen. Des weiteren sollte die Rest-VC-Entfernung unter Verwendung von möglichst wenig Wasserdampf erzielt werden.

Demgemäß wurde eine Vorrichtung zur Intensiventgasung von Polyvinylchlorid-haltigen Dispersionen, bestehend im wesentlichen aus einem Polymerisationskessel (1), einer Kühlvorrichtung (2), und einer Vakuumeinheit (3) gefunden, wobei der Polymerisationskessel (1) in der unteren Hälfte einen Dampfeinlaß (4) enthält und der Polymerisationskessel (1), die Kühlvorrichtung (2) und die Vakuumeinheit (3) über ein dampfdomartiges Zwischenstück (5) miteinander verbunden sind.

Des weiteren wurde die Verwendung der erfindungsgemäßen Vorrichtung sowie ein Verfahren zur Intensiventgasung von PVC-haltigen Dispersionen gefunden.

Als Polymerisationskessel (1) kann man nach den bisherigen Erfahrungen alle Reaktionskessel einsetzen, die sich für eine Polymerisation von Vinylchlorid eignen. Erfindungsgemäß befindet sich in der unteren Hälfte des Polymerisationskessels ein Einlaß für Wasserdampf. In der Regel setzt man als Einlaß einen handelsüblichen Einsatz ein, der üblicherweise in an sich bekannter Weise angebracht ist. Bevorzugt wird dabei der Dampf so eingeleitet, daß er homogen im Polymerisationskessel (1) und in der Dispersion verteilt wird. Man kann die Verteilung des Dampfes zweckmäßig durch Rühren unterstützen.

Als Kühlvorrichtung (2) kann man handelsübliche Rückflußkühler, bevorzugt Rohrbündelkühler einsetzen, bei denen die Kühlfläche durch Einführen eines Inertgases verändert werden kann. Die Abmessungen der Kühlfläche der Kühlvorrichtung hängt im wesentlichen vom Rest-VC-Gehalt, der zugeführten Dampfmenge und der Menge an Dispersion ab. Die Kühlfläche der Kühlvorrichtung gestaltet man zweckmäßig so, daß ein Teil des Dampfes an der Kühlfläche kondensiert werden kann, um die Dispersion unter Rückflußbedingungen stets in einem vorgegebenen Temperaturbereich zu halten.

Als Vakuumeinheit (3) kann man eine übliche Vakuumpumpe mit Kompressor einsetzen, wobei die Leistung des Kompressors üblicherweise im wesentlichen von den Abmessungen des Polymerisationskessels, dem gewünschten verminderten Druck und dem gewünschten Rest-VC-Gehalt abhängt. Die Auswahl geeigneter Vakuumeinheiten ist dem Fachmann auf diesem Gebiet geläufig, so daß sich nähere Angaben hierzu erübrigen.

Nach den bisherigen Beobachtungen ist die Form des Zwischenstücks (5) ohne Einfluß auf den Erfolg des Verfahrens. Bevorzugt ist jedoch eine zylindrische Form mit einem Längen-zu-Durchmesser-Verhältnis im Bereich von 10:1 bis 1:1, vorzugsweise von 7:1 bis 3:1. Des weiteren wählt man die Abmessungen des Zwischenstücks (5) üblicherweise so, daß das Volumenverhältnis von Polymerisationskessel (1) zu Zwischenstück (5) im Bereich von 100:1 bis 10:1, bevorzugt von 50:1 bis 2:1, liegt. Das Zwischenstück kann auch Einbauten enthalten, die es erlauben, gegebenenfalls auftretenden Schaum aus dem Polymerisationskessel von der Kühlvorrichtung und der Vakuumeinheit fernzuhalten.

In einer bevorzugten Ausführungsform (siehe Zeichnung) setzt man als Polymerisationskessel (1) einen hierzu üblichen Behälter aus beispielsweise Edelstahl mit einem Volumen im Bereich von 10 bis 250 m³ ein. Zweckmäßig, beispielsweise zur besseren Verteilung des Wasserdampfes während der Intensiventgasung, enthält der Polymerisationskessel (1) eine zur Polymerisation übliche Rührvorrichtung (7) wie sie beispielsweise in DE-A-33 25 095 beschrieben ist. Über ein zylinderförmiges Zwischenstück (5), dessen Länge-zu-Durchmesser-Verhältnis im Bereich von 10:1 bis 1:1, bevorzugt von 7:1 bis 3:1 liegt, ist der Polymerisationskessel (1) mit der Kühlvorrichtung (2), die aus einem Rohrbündelreaktor mit einer Kühlfläche im Bereich von 20 bis 200, bevorzugt von 60 bis 125 m², besteht, verbunden.

Besonders bevorzugt enthält die Kühlvorrichtung (2) einen Einlaß für ein Inertgas (6), so daß neben der Regulierung über die Dampfmenge am Dampfeinlaß (4) und abgeführte Dampfmenge über die Vakuumeinheit (3) eine weitere Möglichkeit besteht, die Innentemperatur konstant zu halten, indem man die Größe der Kühlfläche steuert: die vermehrte Zugabe eines Inertgases wie Stickstoff, Argon, Helium, insbesondere Stickstoff, führt zu einer Verringerung der zur Kondensation des Wasserdampfes zur Verfügung stehenden Kühlfläche (und somit bei konstanter Dampfmenge zu einer Temperaturerhöhung im Polymerisationskessel), während eine verringerte Zugabe oder überhaupt keine Zugabe eines Inertgases zu einer Vergrößerung der zur Kondensation des Wasserdampfes zur Verfügung stehenden Kühlfläche führt (um somit zu einer Temperaturabsenkung). Zweckmäßig wählt man die zugeführte Menge an Inertgas so, daß die für eine optimale Intensiventgasung gerade erforderliche Dampfmenge zugegeben werden kann, ohne daß die Innentemperatur im Polymerisationskessel sinkt. In der Regel wird dies durch eine Ankopplung der Inertgaszufuhr an die Ventileinstellung des Dampfeinlasses (4) erreicht. Hierdurch kann eine optimale Nutzung, d.h. eine minimale Zufuhr des Wasserdampfes erreicht werden.

In der oben beschriebenen bevorzugten Ausführungsform befindet sich die Abgangsleitung (8) zur Vakuumeinheit (3) üblicherweise in der oberen Hälfte des Zwischenstücks (5), bevorzugt im oberen Drittel. Die Leistung des Kompressors für die Vakuumpumpe wählt man in der oben beschriebenen bevorzugten Ausführungsform im Bereich von 500 bis 2000, bevorzugt von 800 bis 1200 m³/h, so daß im Polymerisationskessel ein verminderter Druck im Bereich von 20 bis 90, bevorzugt von 40 bis 85 kPa erreicht werden kann.

Des weiteren kann es zweckmäßig sein, zwischen Zwischenstück (5) und Vakuumeinheit (3), eine Vorrichtung zur Niederschlagung von gegebenenfalls mitgerissenem Schaum ("Schaumturm"), und gewünschtenfalls eine weitere Kühleinheit zum Wiedergewinnen des im Schaumturm eingesetzten Wassers, vorzusehen.

Das erfindungsgemäße verfahren wendet man auf Dispersionen, insbesondere auf Suspensionen an, die im Polymerisationskessel (1) hergestellt wurden. Es ist ein besonderer Vorteil des erfindungsgemäßen Verfahrens, daß in dem Polymerisationskessel (1) sowohl polymerisiert als auch entgast werden kann, ohne zusätzlichen Aufwand wie Umpumpen der Dispersionen oder Nachbehandeln des entgasten Materials.

Die Polymerisation zu PVC-haltigen Dispersionen, insbesondere Suspensionen, führt man in an sich bekannter Art und Weise, bevorzugt durch Suspensionspolymerisation, durch, wobei die Polymerisation des Vinylchlorids auch in Gegenwart von Emulsionspolymerisaten wie ein- oder mehrstufig hergestellten Polymeren auf Acrylatbasis (siehe beispielsweise DE-A-21 62 615, DE-B-20 13 020, DE-A-2 222 867, EP-A-222 127, EP-B-496 121) durchgeführt werden kann.

Bei den Monomeren handelt es sich insbesondere um Vinylchlorid oder Mischungen von Vinylchlorid und anderen Monomeren (Comonomere) mit mindestens 80 Gew.-% Vinylchlorid. Als Comonomere des Vinylchlorids kommen insbesondere Vinylester, z.B. Vinylacetat, Vinylpropionat u.a., Vinylether wie Vinylmethylether, Vinylethylether, Vinylisobutylether u.a., C₁-C₁₈-Alkylester der Acrylsäure wie Butylacrylat und 2-Ethylhexylacrylat sowie Dialkylmaleate wie Dibutylmaleat in Betracht.

Im Falle der Suspensionspolymerisation können die bei der Herstellung von Polyvinylchlorid üblichen Schutzkolloide eingesetzt werden, wie teilverseifte Polyvinylalkohole oder Celluloseether wie Methyl-, Methylhydroxyethyl- und Methylhydroxypropylcellulose. Polyvinylalkohole und Celluloseether können auch in Kombination eingesetzt werden.

Als monomerlösliche Initiatoren kommen bei der Suspensionspolymerisation übliche Peroxide, Perester, Percarbonate und Azoverbindungen in Betracht, beispielsweise Dilauroylperoxid, Dibenzoylperoxid, tert.-Butylperneodecanoat, tert.-Butylperpivalat, tert.-Butyl-2-ethylhexanoat, Trimethylpentylperneodecanoat, Diisopropylperoxidicarbonat, Di-n-butylperoxidicarbonat, Di-2-ethylhexylperoxidicarbonat, Dicyclohexylperoxidicarbonat.

Vor, während oder nach der Suspensionspolymerisation kann der pH-Wert durch Zugabe von Puffersalzen wie Natriumphosphat, Natriumpolyphosphat oder Natriumhydrogencarbonat eingestellt werden.

Die Polymerisationstemperatur richtet sich nach dem gewünschten Molekulargewicht bzw. K-Wert des Produktes und liegt vorzugsweise zwischen 35 und 80°C, besonders bevorzugt zwischen 45 und 70°C. Die Polymerisation wird zweckmäßigerweise nicht bis zum vollständigen Umsatz des Vinylchlorids geführt, sondern bei einem Umsatz von 60 bis 95 %, bevorzugt 70 bis 85 %, abgebrochen.

Die zu entgasende Dispersion kann nach bisherigen Beobachtungen ohne Nachteile die üblicherweise bei der Polymerisation vorhandenen Hilfsstoffe wie Rückstände des Initiators und dispergierende Mittel enthalten.

Man kann die Konzentration an Feststoffen in der zu entgasenden Dispersion gegebenenfalls abändern, indem man die Dispersion verdünnt oder konzentriert, oder auch ihren physikalischen Zustand verändern, beispielsweise indem man die Dispersion koaguliert.

Der mittlere Teilchendurchmesser (d₅₀-Wert) liegt im allgemeinen im Bereich von 50 bis 250, bevorzugt von 100 bis 200 µm.

Man kann die nach der Polymerisation erhaltene Dispersion direkt der Intensiventgasung unterwerfen, indem man den Druck auf einen Bereich von 20 bis 90 kPa reduziert und die Temperatur in einem Bereich von 80 bis 100°C einstellt. Bevorzugt führt man jedoch vor der Intensiventgasung eine Vorentgasung durch, indem man den unter Druck stehenden Polymerisationskessel auf Normaldruck entspannt und die Temperatur in einem Bereich von 80 bis 100°C wählt. Üblicherweise enthält die so vorentgaste Dispersion Vinylchlorid in im Bereich von 200 bis 5000, bevorzugt von 800 bis 2000 ppm.

Die Intensiventgasung führt man in der Regel bei einer Temperatur im Bereich von 80 bis 100, bevorzugt von 85 bis 95°C durch. Den Druck im Polymerisationskessel wählt man im allgemeinen im Bereich von 20 bis 90, bevorzugt von 40 bis 85 kPa.

Während der Intensiventgasung führt man Wasserdampf über einen Dampfeinlaß in den Polymerisationskessel ein, wobei man den Druck des Wasserdampfes in der Regel im Bereich von 0,5 bis 4,0, vorzugsweise von 1,4 bis 1,8 MPa wählt. Die Temperatur des Wasserdampfes liegt üblicherweise im Bereich von 100 bis 250, vorzugsweise von 180 bis 220°C.

Die Menge des zugeführten Wasserdampfes hängt im wesentlichen von der gewählten Innentemperatur im Polymerisationskessel, und bevorzugt, auch von der Menge an zugeführtem Inertgas, und der Menge an Dispersion ab. Im allgemeinen führt man von 0,03 bis 0,2, vorzugsweise von 0,07 bis 0,17 t Wasserdampf/h pro Tonne PVC (bezogen auf getrocknetes PVC) in den Polymerisationskessel. Gleichzeitig führt man mindestens 0,01, bevorzugt mehr als 0,02 t/h pro Tonne PVC (getrocknet) Wasserdampf ab.

Die Menge an Inertgas in die Kühlvorrichtung zur Konstanthaltung der Innentemperatur im Polymerisationskessel hängt im wesentlichen von der gewünschten Innentemperatur, der zugeführten Menge an Wasserdampf und der Menge an Dispersion ab. Üblicherweise wählt man die Menge an Inertgas im Bereich von 0,1 bis 5, bevorzugt von 0,5 bis 2 m³ pro Tonne PVC (getrocknet).

Die Dauer der Intensiventgasung wählt man üblicherweise im Bereich von 0,5 bis 2 h, bevorzugt von 45 bis 90 min.

Die erfindungsgemäße Vorrichtung wird erfindungsgemäß zur Intensiventgasung von PVC-Dispersionen verwendet, insbesondere für PVC-Suspensionen, in denen Rest-VC-Gehalte von unter 25, bevorzugt unter 10, besonders bevorzugt von kleiner oder gleich 2 ppm erreicht werden sollen. Die nachfolgende Trocknung und Weiterverarbeitung nimmt man mit in an sich bekannter Weise in Dekantern, Stromtrocknern oder in einem Wirbelbett vor, wobei man gewünschtenfalls durch Sieben unerwünschte Grobteilchen - so vorhanden - entfernen kann (s. Becker/Braun, Kunststoff-Handbuch 2/1, S.218 ff, 1986).

Der Vorteil der erfindungsgemäßen Vorrichtung liegt darin, daß die Rest-VC-Gehalte von PVC-Dispersionen, insbesondere von PVC-Suspensionen, auf Werte von unter 10 ppm vor dem Trocknen gebracht werden können ohne übliche Nachbehandlungsschritte zur Senkung des Rest-VC-Gehaltes. Des weiteren kann durch die Kopplung von Wasserdampfzufuhr und Inertgaszufuhr die Menge an Wasserdampf minimiert werden.

### Beispiele

Die Teilchengröße wurde mit einem MALVERN Mastersizer (siehe auch Verfahrenstechnik 24 (1990), S. 36ff.) bestimmt. Gemessen wurde die Fraunhofer-Beugung bei einer Wellenlänge von 633 nm. Durch Wahl einer Vorsatzlinse mit einer Brennweite von f = 600 mm wurde die Teilchengrößenverteilung in einem Bereich von 10 bis 600 µm bestimmt. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert.

Die Messungen der VC-Gehalte wurden gaschromatographisch durchgeführt, wobei jeweils ca. 1 g Suspension abgewogen, dann 15 min bei 80°C temperiert und mittels "head-space-Technik" analysiert wurden (Zeit. für analyt. Chemie 255 (1971) S. 345 bis 350).

Der K-Wert nach Fikentscher (Cellulosechemie Band 13, S. 48 bis 64 und 71 bis 74 (1932) der PVC-Massen wurde gemessen in Cyclohexanon (0,5 g Polymer in 100 ml gelöst) bei einer Temperatur von 25°C (DIN 53 726).

### Herstellung der PVC-Suspensionen

### Beispiel 1 (analog zu DE-A-36-33 818)

Ein Polymerisationskessel wurde mit 15.000 kg Wasser, 4,2 kg Methylhydroxypropylcellulose (Methoxylgehalt 29 Gew.-%, Propoxylgehalt 10 Gew.-%; Viskosität der 2 gew.-%igen wäßrigen Lösung bei 20°C: 50 mPas), 15 kg Natriumtripolyphosphat, 6 kg Dilauroylperoxid und 4,5 kg tert.-Butyl-peroxineodecanoat gefüllt. Nach Verdrängen des Luftsauerstoffs durch Stickstoff und Zugabe von 15.000 kg Vinylchlorid wurde der Kessel innerhalb von 30 min auf 60°C aufgeheizt. Nach 4 h wurde die Polymerisation durch Zugabe von 500 Gew.-ppm, bezogen auf die Menge des eingesetzten Monomeren, alpha-Methylstyrol gestoppt. Der Umsatz, bezogen auf Vinylchlorid, betrug 85 %.

### Beispiel 2 (analog zu DE-A-36 33 818)

Ein Polymerisationskessel wurde mit 17.000 kg Wasser, 4,2 kg Methylhydroxypropylcellulose (wie in Beispiel 1), 7 kg eines teilverseiften Polyvinylacetates mit einem Verseifungsgrad von 70 mol-%, 7 kg Natriumtripolyphosphat und 8 kg Tert.-Butylperneodekanoat gefüllt. Nach Verdrängen des Luftsauerstoffs durch Stickstoff und Zugabe von 14.000 kg Vinylchlorid wurde der Kessel innerhalb von 30 min auf 50°C aufgeheizt. Nach 5 h wurde die Reaktion durch Zugabe von 500 Gew.-ppm, bezogen auf die Menge des eingesetzten Monomeren, alpha-Methylstyrol gestoppt. Der Umsatz, bezogen auf Vinylchlorid, betrug 83 %.

### Beispiel 3 (analog zu EP-A-496 121)

Ein Polymerisationskessel wurde mit 14.000 kg Wasser, 3.400 kg einer 40 gew.-%igen Dispersion, erhalten durch Emulsionspolymerisation von n-Butylacrylat in Gegenwart von 2 Gew.-% Butadien, 15 kg Methylhydroxpropylcellulose (wie in Beispiel 1), 14 kg Natriumtripolyphosphat und 5,6 kg Tert.-butylper-neodekanoat gefüllt. Nach Verdrängen des Luftsauerstoffs durch Stickstoff und Zugabe von 14.000 kg Vinylchlorid wurde der Polymerisationskessel innerhalb von 30 min auf 60°C aufgeheizt. Nach 4 h wurde die Polymerisation durch Zugabe von 500 Gew. -ppm, bezogen auf die Menge des Vinylchlorids, alpha-Methylstyrol gestoppt. Der Umsatz, bezogen auf Vinylchlorid, lag bei ca. 80 %.

Für die folgenden Beispiele wurde als Zwischenstück (5) in der erfindungsgemäßen Vorrichtung ein zylinderförmiges Stahlteil mit einer Länge (=Höhe) von 4 m und einem Durchmesser von 0,6 m eingesetzt. In einer Höhe von 3,5 m wurde die Verbindungsleitung zur Vakuumeinheit angebracht.

### Beispiel 4

(a) Vorentgasung
   30000 l einer PVC-Dispersion aus Beispiel 1 wurden in einem Polymerisationskessel mit einem Fassungsvermögen von 45 m³ von einem Druck von 990 kPa und einer Temperatur von 64°C auf Normaldruck (100 kPa) entspannt unter gleichzeitiger Erhöhung der Innentemperatur (= Temperatur der Dispersion) auf 95°C mittels Dampfzugabe (Dampfdruck = 16 bar). Nach 45 min war der Druck auf 100 kPa abgesenkt. Der VC-Gehalt der so erhaltenen Dispersion betrug 1000 ppm.
(b) Intensiventgasung
   Bei der vorentgasten Dispersion aus Schritt (a) wurde der Druck im Polymerisationskessel auf einen Enddruck von 80 kPa bei einer Endtemperatur von 95°C weiter gesenkt. Gleichzeitig wurden 0,09 t Dampf /h pro Tonne PVC durch die Dispersion geleitet, wobei 0,02 t/h pro Tonne PVC Wasserdampf über die Vakuumeinrichtung entfernt wurden. Die Inertgaszufuhr (Stickstoff) betrugt 2 m³ pro Tonne PVC (getrocknet). Die Kühlfläche der Kühlvorrichtung betrug 80 m². Nach 45 min wurde auf Raumtemperatur abgekühlt und ein Druck von 100 kPa eingestellt. Der Rest-VC-Gehalt der Dispersion betrug 0,5 ppm.

### Beispiele 5 und 6

Analog zu Beispiel 4 wurden in Beispiel 5 eine PVC-Suspension aus Beispiel 2 und in Beispiel 6 eine PVC-Suspension aus Beispiel 3 mit den in untenstehender Tabelle aufgeführten Parametern der Intensiventgasung unterworfen. Die Bedingungen für die Vorentgasung waren dieselben wie unter (a) in Beispiel 4 angegeben, mit Ausnahme der Temperaturen für die jeweiligen Vorentgasungsschritte, die denen der Intensiventgasung (siehe Tabelle) entsprechen. Ebenfalls in der Tabelle aufgeführt sind die erhaltenen Rest-VC-Gehalte der noch nicht getrockneten Dispersionen. Die Rest-VC-Gehalte der getrockneten Produkte betrug in allen Fällen < 0,1 ppm.

Die Schüttdichte wurde nach DIN 53 466 ermittelt.
Die Porosität wurde nach DIN 53 417 ermittelt.

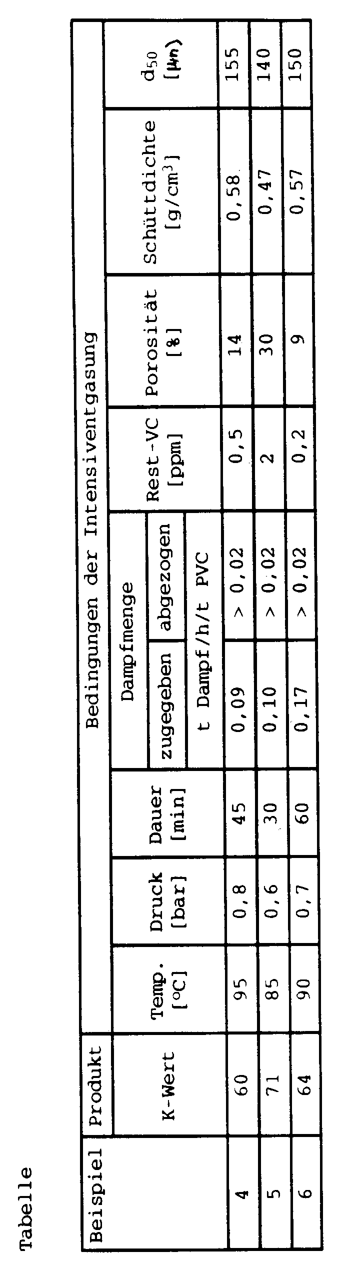

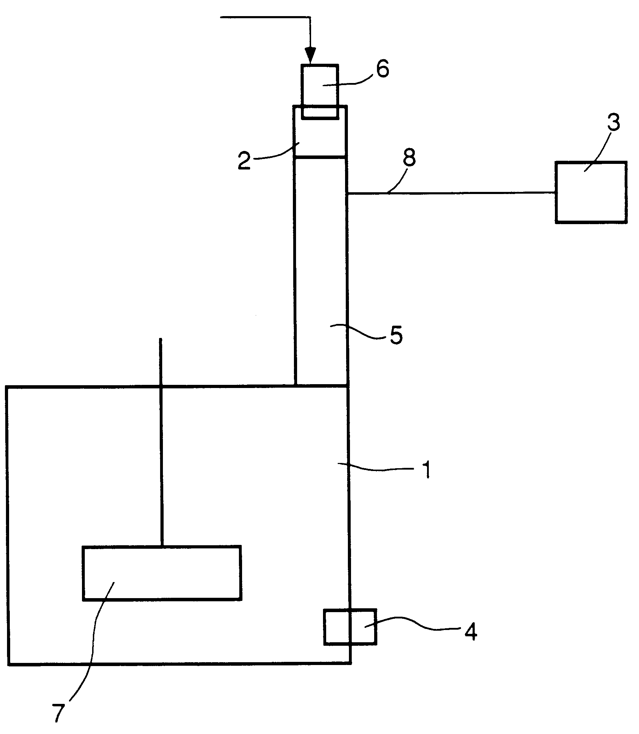

## Patentansprüche

1. Vorrichtung zur Intensiventgasung von Polyvinylchlorid-haltigen Dispersionen, bestehend im wesentlichen aus einem Polymerisationskessel (1), einer Kühlvorrichtung (2), und einer Vakuumeinheit (3), dadurch gekennzeichnet, daß der Polymerisationskessel (1) in der unteren Hälfte einen Dampfeinlaß (4) enthält und der Polymerisationskessel (1), die Kühlvorrichtung (2) und die Vakuumeinheit (3) über ein dampfdomartiges Zwischenstück (5) miteinander verbunden sind.

2. Vorrichtung gemäß Anspruch 1, dadurch gekennzeichnet, daß die Kühlvorrichtung (2) am oberen Ende eine Vorrichtung (6) zur Einleitung eines Inertgases enthält.

3. Verfahren zur Intensiventgasung von Polyvinylchlorid-haltigen Dispersionen, wobei unumgesetztes Vinylchlorid mittels Wasserdampf entfernt wird, dadurch gekennzeichnet, daß man die Intensiventgasung in der Vorrichtung gemäß Anspruch 1 oder 2 durchführt, wobei in dem Polymerisationskessel sowohl polymerisiert als auch entgast wird.

4. Verwendung der Vorrichtung gemäß den Ansprüchen 1 oder 2 zur Intensiventgasung von Polyvinylchlorid-haltigen Dispersionen.

## Claims

1. An apparatus for the intensive degassing of polyvinyl chloride-containing dispersions, essentially comprising a polymerization reactor (1), a cooling device (2), and a vacuum unit (3), wherein the polymerization reactor (1) contains a steam inlet (4) in the lower half, and the polymerization reactor (1), the cooling device (2) and the vacuum unit (3) are connected to one another via a steam dome-like intermediate piece (5).

2. An apparatus as claimed in claim 1, wherein the cooling device (2) contains a device (6) for introducing an inert gas at the upper end.

3. A process for the intensive degassing of polyvinyl chloride-containing dispersions, in which unreacted vinyl chloride is removed by means of steam, which comprises carrying out the intensive degassing in an apparatus as claimed in claim 1 or 2, both polymerization and degassing being carried out in the polymerization reactor.

4. The use of an apparatus as claimed in claim 1 or 2 for the intensive degassing of polyvinyl chloride-containing dispersions.

## Revendications

1. Dispositif pour l'élimination poussée des produits volatils de dispersions contenant du chlorure de polyvinyle, constitué essentiellement d'une cuve de polymérisation (1), d'un dispositif de refroidissement (2) et d'une unité de vide (3), caractérisé en ce que la cuve de polymérisation (1) contient une entrée (4) pour la vapeur dans sa moitié inférieure et la cuve de polymérisation (1), le dispositif de refroidissement (2) et l'unité de vide (3) sont reliés l'un à l'autre va un raccord (5) en forme de dôme de prise de vapeur.

2. Dispositif selon la revendication 1, caractérisé en ce que le dispositif de refroidissement (2) contient, à son extrémité supérieure, un dispositif (6) pour l'introduction d'un gaz inerte.

3. Procédé pour l'élimination poussée de produits volatils de dispersions contenant du chlorure de polyvinyle, dans lequel on élimine le chlorure de vinyle n'ayant pas réagi à l'aide de vapeur d'eau, caractérisé en ce qu'on effectue l'élimination poussée des produits volatils dans le dispositif selon la revendication 1 ou 2, dans lequel on procède, dans la cuve de polymérisation, aussi bien à la polymérisation qu'à l'élimination des produits volatils.

4. Utilisation du dispositif selon les revendications 1 ou 2 pour l'élimination poussée des produits volatils de dispersions contenant du chlorure de polyvinyle.
